# EUROPEAN PATENT SPECIFICATION

(11) **EP 3 054 651 B1**
(45) Date of publication and mention of the grant of the patent: **29.08.2018**
(21) Application number: 15192774.6
(22) Date of filing: 03.11.2015
(51) Int. Cl.: H04W 4/70, H04W 52/02, H04L 29/08, G08C 17/02

(54) **ELECTRONIC APPARATUS, CONTROL METHOD AND SYSTEM THEREOF**
ELEKTRONISCHE VORRICHTUNG, STEUERUNGSVERFAHREN UND SYSTEM DAMIT
APPAREIL ÉLECTRONIQUE, PROCÉDÉ DE COMMANDE ET SYSTÈME CORRESPONDANT

(30) Priority: 09.02.2015 KR 20150019525
(43) Date of publication of application: 10.08.2016
(73) Proprietor: Samsung Electronics Co., Ltd., Gyeonggi-do 16677 (KR)
(72) Inventor: LEE, Jin-hee, Gyeonggi-do (KR); CHOI, Hoon, Gyeonggi-do (KR); KIM, Bong-su, Gyeonggi-do (KR)
(74) Representative: Appleyard Lees IP LLP

(56) References cited:
- EP-A1- 2 755 398
- US-A1- 2011 136 433
- US-A1- 2014 150 010
- US-B2- 8 509 954

## Description

### BACKGROUND

### Field

Methods and apparatuses consistent with exemplary embodiments relate to an electronic apparatus, and a control method and a system thereof, and more particularly, to an electronic apparatus for providing an environment of Internet of things (loT), and a control method and a system thereof.

### Description of the Prior Art

Due to the development of electronic technology, various types of electronic products are developed and distributed, and electronic apparatuses provided with various communication functions are widely used in various places such as homes. The electronic products that are provided with communication functions may provide environments for Internet of Things (loT).

The loT refers to an environment in which information on things of everyday lives can be shared through wired and/or wireless networks. In various fields including a smart home and the like, information can be shared through networks. To provide an environment of loT, various types of sensing devices and hubs for collecting sensing results from the sensing devices are used.

EP2755398 (A1) discloses a display apparatus which includes a video receptor configured to receive a video signal; a displayer configured to display an image; a communicator configured to receive an input signal from an external terminal and transmit the video signal to the external terminal; and a controller configured to monitor whether the input signal is received through the communicator, and change an operating mode to a transmission mode from an off mode in which the displayer and the video receptor are in an off state and control the communicator to transmit the video signal to the external terminal transmitting a video transmission request in response to the received input signal including the video transmission request.

US2014150010 (A1) discloses a content reproducing method and system for performing seamless playback of contents between devices is provided. The contents reproducing system includes a portable device which, when a short distance communication with a remote control which is configured to control an electronic device occurs during reproducing of contents, generates data required by the electronic device for reproducing the contents that are being reproduced, and which transmits the generated data to the remote control; the remote control which receives the data from the portable device and which transmits the received data to the electronic device, in conjunction with the occurrence of the short distance communication with the portable device; and the electronic device for receiving the contents from a contents provider and reproducing the contents.

### SUMMARY

According to the present invention there is provided an apparatus and method as set forth in the appended claims. Other features of the invention will be apparent from the dependent claims, and the description which follows.

One or more exemplary embodiments provide an electronic apparatus capable of, upon receiving a sensing result from a sensing device, activating a certain communicator to provide the sensing result to a user, and transmitting the received sensing result to a server, and a control method and a system thereof.

According to an aspect of an exemplary embodiment, there is provided an electronic apparatus including: a first communicator configured to perform communication with a remote control device, which is configured to remotely control the electronic apparatus, the first communicator having an activated state in a standby state of the electronic apparatus; a second communicator configured to perform communication with an Internet of things (loT) server, the second communicator having an inactivated state in the standby state of the electronic apparatus; and a processor configured to, in response to receiving a sensing result signal, including a sensing result sensed by at least one sensing device, from the remote control device, activate the second communicator to transmit the sensing result received from the remote control device to the IoT server.

The processor may be configured to transmit state information of the electronic apparatus to the remote control device, receive the sensing result signal further including an activation signal from the remote control device based on the state information of the electronic apparatus, and in response to the sensing result signal further including the activation signal, activate the second communicator.

The processor may be configured to, in response to receiving the sensing result signal, convert the sensing result signal into a signal that is in accordance with a communication standard of the second communicator, and transmit the converted signal to the IoT server.

The first communicator may be configured to perform the communication with the remote control device using a Bluetooth standard, and the second communicator may be configured to perform the communication with the IoT server using a WiFi standard, and the processor may be configured to, in response to receiving the sensing result signal, convert the sensing result signal that is in accordance with the Bluetooth standard into a signal that is in accordance with the WiFi standard, and transmit the converted signal to the IoT server.

The processor may be configured to, in response to completion of transmission of the received sensing result to the IoT server, inactivate the second communicator.

The sensing result may include at least one from among a result of sensing whether a door is open or closed, a result of sensing a human body, and a result of motion recognition.

The electronic apparatus may further include a display, wherein the processor is configured to control the display to display a user interface (UI), for displaying the received sensing result and for notifying when transmission of the received sensing result to the IoT server is completed.

The electronic apparatus may further include a storage, wherein the processor is configured to, in response to receiving the sensing result signal from the remote control device, store the sensing result included in the sensing result signal, in the storage, and activate the second communicator a predetermined period of time after the sensing result is stored to transmit the sensing result to the IoT server.

The processor may be configured to group the received sensing result based on at least one from among a timing of sensing the received sensing result, a sensed object, and a sensing method, and store the grouped sensing result in the storage.

The electronic apparatus may further include a power source configured to supply power to at least one from among the first communicator and the second communicator in response to a power on state of the electronic apparatus, and supply power to only the first communicator among the first communicator and the second communicator in response to the standby state of the electronic apparatus.

According to an aspect of another exemplary embodiment, there is provided a method of controlling an electronic apparatus, the electronic apparatus including a first communicator and a second communicator, the method including: receiving a sensing result signal, including a sensing result sensed by at least one sensing device, from a remote control device configured to remotely control the electronic apparatus, through the first communicator, the first communicator having an activated state in a standby state of the electronic apparatus; in response to receiving the sensing result signal, activating the second communicator configured to perform communication with an Internet of things (IoT) server, the second communicator having an inactivated state in the standby state of the electronic apparatus; and transmitting the sensing result received from the remote control device to the IoT server through the activated second communicator.

The method may further include transmitting state information of the electronic apparatus to the remote control device, wherein the receiving includes receiving the sensing result signal further including an activation signal from the remote control device based on the state information of the electronic apparatus, and wherein the activating includes activating the second communicator in response to the sensing result signal further including the activation signal.

The method may further include, in response to receiving the sensing result signal, converting the sensing result into a signal that is in accordance with a communication standard of the second communicator, wherein the transmitting includes transmitting the converted signal to the IoT server.

The first communicator may be configured to perform communication with the remote control device using a Bluetooth standard, and the second communicator may be configured to perform the communication with the IoT server using a WiFi standard. The converting may include converting, in response to receiving the sensing result signal, the sensing result signal in accordance with the Bluetooth standard into a signal that is in accordance with the WiFi standard. The transmitting the converted signal may include transmitting the converted signal in accordance with the WiFi standard to the IoT server.

The method may further include, in response to completion of transmission of the received sensing result to the IoT server, inactivating the second communicator.

The sensing result may include at least one from among a result of sensing whether a door is open or closed, a result of sensing a human body, and a result of motion recognition.

The method may further include displaying a UI for displaying the received sensing result and for notifying when transmission of the received sensing result to the IoT server is completed.

The method may further include, in response to receiving the sensing result signal from the remote control device, storing the received sensing result included in the sensing result signal, wherein the activating includes activating the second communicator a predetermined period of time after the received sensing result is stored, and wherein the transmitting includes transmitting the sensing result to the IoT server.

The storing may include grouping the received sensing result based on at least one from among a timing of sensing the received sensing result, a sensed object, and a sensing method, and storing the grouped sensing result.

According to an aspect of still another exemplary embodiment, provided is a system including: a remote control device configured to remotely control an electronic apparatus, receive a sensing result sensed by at least one sensing device, and transmit a sensing result signal including the sensing result to the electronic apparatus; and the electronic apparatus including: a first communicator configured to perform communication with the remote control device, the first communicator having an activated state in a standby state of the electronic apparatus; and a second communicator configured to perform communication with an Internet of things (IoT) server, the second communicator having an inactivated state in the standby state of the electronic apparatus, wherein the electronic apparatus is configured to, in response to receiving the sensing result signal from the remote control device, activate the second communicator to transmit the sensing result received from the remote control device to the IoT server.

According to an aspect of still another exemplary embodiment, provided is a non-transitory computer readable storage medium having stored thereon a program which, when executed by a computer, causes the computer to perform the above-described method.

According to an aspect of still another exemplary embodiment, provided is an electronic apparatus including: a communicator configured to communicate with an Internet of things (IoT) server; and a processor configured to detect whether IoT data is received and selectively activate the communicator in response to detecting that the IoT data is received to transmit the IoT data to the IoT server through the communicator.

The processor may be configured to selectively activate the communicator in response to a standby mode of the electronic apparatus.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a view illustrating an internet of things (IoT) environment using a hub;
FIG. 2 is a view illustrating an IoT system according to an exemplary embodiment;
FIGS. 3A and 3B are block diagrams illustrating a configuration of an electronic device according to exemplary embodiments;
FIG. 4 is a sequence view for explaining a process of receiving a sensing result in an electronic device according to an exemplary embodiment;
FIG. 5 is a flowchart for explaining a process of transmitting a sensing result to an IoT server from an electronic device according to an exemplary embodiment;
FIGS. 6A and 6B are views for explaining operations of an electronic device according to exemplary embodiments;
FIG. 7 is a view for explaining a method of storing a sensing result to be transmitted to an loT server according to an exemplary embodiment; and
FIG. 8 is a flowchart for explaining a control method of an electronic device according to an exemplary embodiment.

### DETAILED DESCRIPTION

Certain exemplary embodiments are described in greater detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure exemplary embodiments with unnecessary detail.

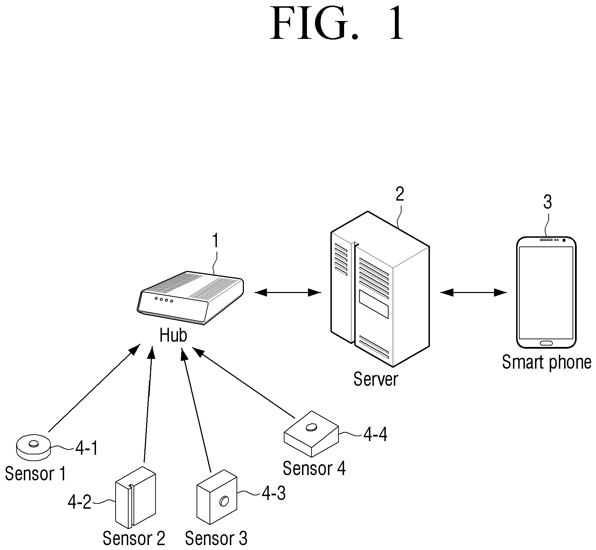

FIG. 1 is a view illustrating an Internet of things (IoT) environment using a hub.

Referring to FIG. 1, a hub 1 receives a sensing result from a plurality of sensing devices 4-1, 4-2, 4-3, and 4-4, and transmits the received sensing result to a server 2. The server 2 is connected to user terminal devices such as, for example, a smart phone 3, a desktop personal computer (PC) and the like to provide the sensing result to the user.

The hub 2 that collects the sensing result includes a sensor communicator (not shown) and a server communicator (not shown) of which power needs to be always turned on, thereby consuming a significant amount of waiting power. Furthermore, in order to provide the hub 2, the cost for providing the IoT environment increases.

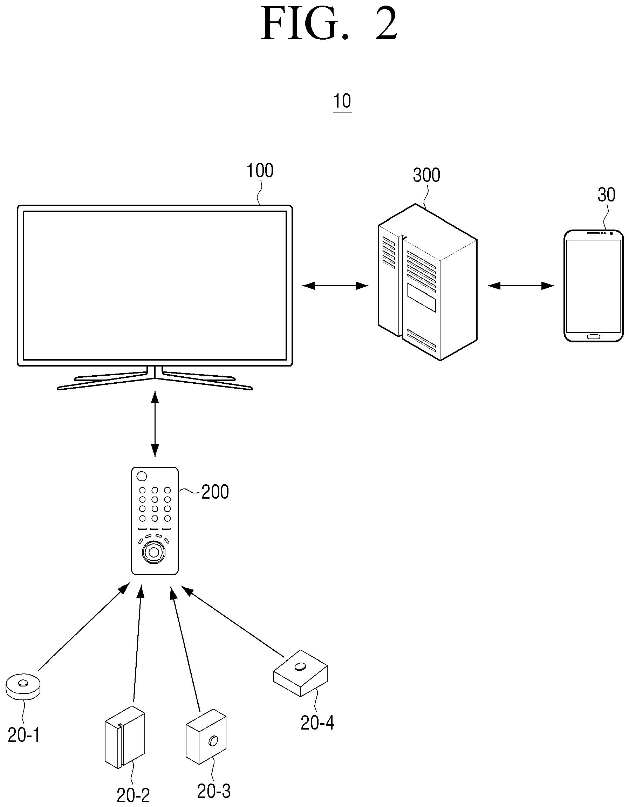

FIG. 2 is a view illustrating an Internet of things (IoT) system 10 according to an exemplary embodiment. As illustrated in FIG. 2, the IoT system 10 includes an electronic device 100, a remote control device 200, an loT server 300, a plurality of sensing devices 20-1, 20-2, 20-3, and 20-4, and a smart phone 30.

The electronic device 100 may perform communication with the remote control device 200. Particularly, the electronic device 100 may receive from the remote control device 200 a signal that includes a sensing result that is sensed by the plurality of sensing devices 20-1 to 20-4. A communicator (not shown) included in the electronic device 100 that performs communication with the remote control device 200 may be constantly in an activated state. The sensing result may include a sensing result that is sensed by one of the plurality of sensing devices 20-1 to 20-4, or a sensing result that is sensed by some or all of the plurality of sensing devices 20-1 to 20-4. For example, the plurality of sensing devices 20-1 to 20-4 may be connected with each other in an interlocked manner. The electronic device 100 may also receive a control signal for controlling the electronic device 100 from the remote control device 200.

The sensing result (or Internet of Things (IoT) data) may include, for example but not limited to, a result of at least one of sensing whether a door is open or closed, sensing a human body, and motion recognition. Also, the plurality of sensing devices 20-1 to 20-4 may include various types of sensing devices such as, for example, a camera, a motion sensor, a temperature sensor, a humidity sensor, a light sensor, etc. However, this is merely an example and the exemplary embodiments are not limited thereto.

The electronic device 100 may transmit a piece of information (or state information) on a state of the electronic device 100 to the remote control device 200. The state information of the electronic device 100 may be information on whether the electronic device 100 is in a power on state or a standby state. In response to a power on state of the electronic device 100, power may be supplied to all of components included in the electronic device 100. On the other hand, in response to a standby state of the electronic device 100, power may be supplied to only one or some of the components included in the electronic device 100.

In response to receiving the signal that includes a sensing result, the electronic device 100 may activate a certain communicator that is in an inactivated state. The certain communicator may be different from the communicator that performs communication with the remote control device 200. When the electronic device 100 is in a standby state, the certain communicator may be in an inactivated state, while the communicator that performs communication with the remote control device 200 is in an activated state. That is, the certain communicator may be selectively activated in response to receiving the signal that includes a sensing result.

For example, the signal that includes a sensing result may include, but is not limited thereto, a signal including only the sensing result. Also, for example, the signal that includes a sensing result may further include a signal for controlling the electronic device 100 and/or a signal for activating the certain communicator of the electronic device 100.

The electronic device 100 may transmit the received sensing result to the loT server 300 using the activated certain communicator. The electronic device 100 may transmit only the received sensing result to the IoT server 300. For example, the electronic device 100 may receive a signal that includes the sensing result as well as a signal for controlling the electronic device 100 from the remote control device 200. In this case, the electronic device 100 may transmit only the sensing result to the IoT server 300 among the received sensing result and the received signal for controlling the electronic device 100. When transmitting the received sensing result to the loT server 300, the electronic device 100 may change a communication standard and transmit the received sensing result according to the changed communication standard. For example, the electronic device 100 may receive a signal that includes a sensing result according to a Bluetooth standard, and change the received signal to a signal according to a WiFi standard, and transmit the changed signal to the loT server 300.

The remote control device 200 may receive the sensing result from at least one of the sensing devices 20-1 to 20-4. The remote control device 200 may transmit the received sensing result to the electronic device 100. The remote control device 200 may be controlled to be constantly in an activated state to receive the sensing result from the at least one of the sensing devices 20-1 to 20-4. The remote control device 200 may use at least one of, for example, a Z-Wave communication standard and a Zigbee communication standard to receive the sensing result from the at least one of the sensing devices 20-1 to 20-4. The received signal is transmitted within the remote control device 200 via a universal asynchronous receiver/transmitter (UART) communication to a micro controller unit (MCU) of the remote control device 200. The MCU of the remote control device 200 changes the received signal to a signal that is in accordance with the communication standard that is used for communication between the electronic device 100 and the remote control device 200, and transmits the signal to the electronic device 100.

The remote control device 200 may incorporate at least one of a signal for controlling the electronic device 100 and a signal for activating the certain communicator into the received sensing result, and transmit the received sensing result to the electronic device 100. For example, the remote control device 200 may receive the state information of the electronic device 100 from the electronic device 100. In response to determining that the state of the electronic device 100 is a standby state according to the received state information of the electronic device 100, the remote control device 200 may transmit the signal that includes the signal for activating the certain communicator of the electronic device 100 and the received sensing result to the electronic device 100. As described above, in response to a standby state of the electronic device 100, a certain component of the electronic device 100 may be in an inactivated state where power is not provided thereto.

In response to the remote control device 200 not receiving the state information of the electronic device 100, the remote control device 200 may transmit a signal that includes at least one of a sensing result and a control signal for controlling the electronic device 100 to the electronic device 100.

In response to the remote control device 200 receiving the state information of the electronic device 100, the remote control device 200 may transmit the sensing result and an activation signal for activating the certain component of the electronic device 100 to the electronic device 100. In a power on state or a standby state, the electronic device 100 may transmit the state information of the electronic device 100 to the remote control device 200. On the other hand, in a power off state, the electronic device 100 is not capable of transmitting the state information of the electronic device 100 to the remote control device 200. The power off state may include a state where a power cable of the electronic device 100 is not connected to power and thus power is not being supplied to the electronic device 100. In response to not receiving the state information from the electronic device 100 for a predetermined period of time, it may be determined that the electronic device 100 is in a power off state, and the user may be notified that the electronic device 100 is in a power off state by, for example, flickering of a light emitting diode (LED) provided in the remote control device 200.

The plurality of sensing devices 20-1 to 20-4 may transmit to the remote control device 200 respective sensing results thereof upon sensing the sensing result. In an exemplary embodiment, the plurality of sensing devices 20-1 to 20-4 may be constantly in an activated state to perform a sensing operation in real time.

The IoT server 300 may receive the sensing result from the electronic device 100 and provide the sensing result to the user. However, in response to determining that the electronic device 100 is in a power off state, the IoT server 300 may notify the user that the electronic device 100 is in a power off state.

The smart phone 30 may receive the sensing result from the IoT server 300. However, this is only an example, and the exemplary embodiments are not limited thereto. For example, the smart phone 30 may be configured to access the IoT server 300 and check the sensing result in response to a user command. FIG. 2 illustrates a case of a user terminal being the smart phone 30. However, the exemplary embodiments are not limited thereto and any electronic device capable of accessing the IoT server 300 may be used. For example, the user may check the sensing result by using a desk top PC, a tablet PC, and the like.

Also, FIG. 2 illustrates that the electronic device 100 is a display device, but the exemplary embodiments are not limited thereto. For example, the electronic device 100 may be a desk top PC or a tablet PC provided with a display, or a set top box where a display is not provided.

Hereinafter, an exemplary embodiment in which the electronic device 100 operates in a standby state will be described. However, when needed, explanation will be made with respect to the electronic device 100 being in a power on or power off state.

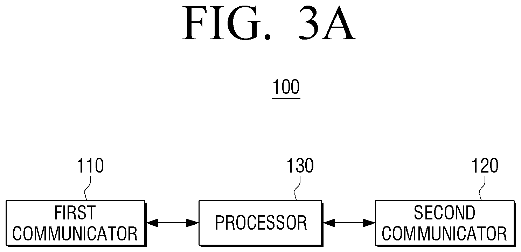

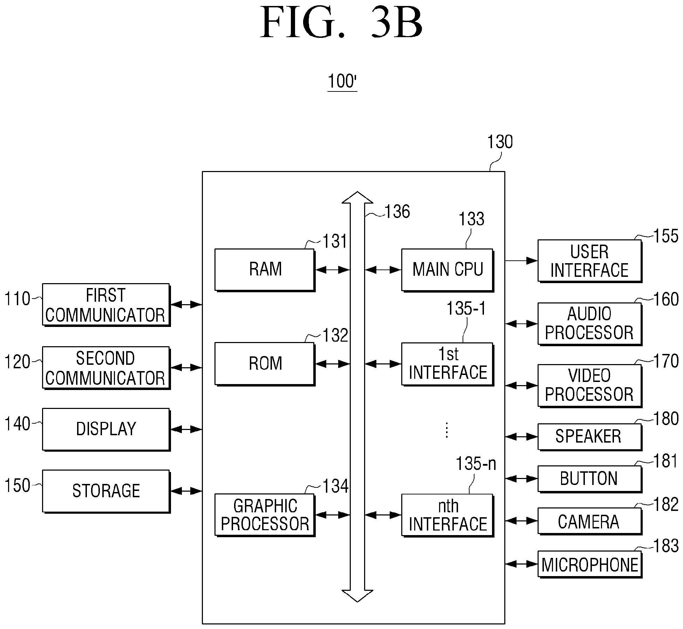

FIGS. 3A and 3B are block diagrams illustrating a configuration of the electronic device 100 according to an exemplary embodiment.

According to FIG. 3A, the electronic device 100 includes a first communicator 110, a second communicator 120, and a processor 130.

FIG. 3A illustrates components of the electronic device 100 in a case where the electronic device 100 is provided with communication functions. Therefore, depending on embodiments, some of the components illustrated in FIG. 3A may be omitted or changed, or other types of components may be further included.

The first communicator 110 performs communication with the remote control device 200.

Specifically, the first communicator 110 communicates with the remote control device 200 that remotely controls the electronic device 100, and the first communicator 110 is in an activated state in response to a standby state of the electronic device 100. The first communicator 110 may receive from the remote control device 200 a signal that includes a sensing result sensed by at least one sensing device.

The first communicator 110 may perform unilateral communication and/or bilateral communication with the remote control device 200. In the case of performing unilateral communication, the first communicator 110 may receive a signal from the remote control device 200. In the case of performing bilateral communication, the first communicator 110 may receive a signal from the remote control device 200 and/or transmit a signal to the remote control device 200.

The second communicator 120 performs communication with the IoT server 300.

Specifically, the second communicator 120 may transmit a sensing result received through the first communicator 110 to the IoT server 300. Herein, in a case where the electronic device 100 is in a standby mode, the second communicator 120 may be converted from an inactivated state into an activated state, and transmit the sensing result to the IoT server 300.

The second communicator 120 may perform unilateral communication and/or bilateral communication with the IoT server 300. In the case of performing unilateral communication, the second communicator 120 may transmit a signal to the IoT server 300. In the case of performing bilateral communication, the second communicator 120 may receive a signal from the IoT server 300 and/or transmit a signal to the IoT server 300.

In response to receiving a signal that includes a sensing result sensed by at least one sensing device, the processor 130 may activate the second communicator 120, and transmit the sensing result received from the remote control device 200 to the IoT server 300.

The processor 130 may transmit state information of the electronic device 100 to the remote control device 200, receive from the remote control device 200 a signal including the sensing result and/or an activation signal in response to the state information of the electronic device 100, and in response to the received signal including the activation signal, activate the second communicator 120.

In response to receiving the signal that includes the sensing result, the processor 130 may convert the sensing result into a signal that is in accordance with the communications standard of the second communicator 120, and transmit the converted signal to the IoT server 300.

In an exemplary embodiment, the first communicator 110 may perform communication with the remote control device 200 using the Bluetooth standard, while the second communicator 120 performs communication with the IoT server 300 using the WiFi standard, and in response to receiving the signal that includes the sensing result, the processor 130 may convert the sensing result from the signal that is in accordance with the Bluetooth standard into a signal that is in accordance with the WiFi standard, and transmit the converted signal to the IoT server 300.

In response to completion of transmission of the sensing result received from the remote control device 200 to the IoT server 300, the processor 130 may inactivate the second communicator 120.

The sensing result may include, for example but not limited to, a result of at least one of sensing whether a door is open or closed, sensing a human body, and motion recognition.

The electronic device 100 may further include a display (not shown), and the processor 130 may control the display to display a user interface (UI) for displaying the received sensing result and for notifying when transmission of the received sensing result to the IoT server 300 is completed.

The electronic device 100 may further include a storage (not shown), and in response to receiving the signal that includes the sensing result sensed by the at least one sensing device, the processor 130 may store the received sensing result in the storage, and activate the second communicator 120 in a predetermined time interval to transmit the sensing result stored in the storage to the IoT server 300.

The processor 130 may group the sensing result based on at least one of a timing of sensing the sensing result, a sensed object, and a sensing method, and store the grouped sensing result in the storage.

The electronic device 100 may further include a power source configured to supply power to the first communicator 110 and the second communicator 120 in response to a power on state of the electronic device 100, and to supply power to the first communicator 110 but not to the second communicator 120 in response to a standby state of the electronic device 100.

FIG. 3B is a block diagram illustrating a configuration of an electronic device 100' according to another exemplary embodiment. According to FIG. 3B, the electronic device 100' includes a first communicator 110, a second communicator 120, a processor 130, a display 140, a storage 150, a user interface 155, an audio processor 160, a video processor 170, a speaker 180, a button 181, a camera 182, and a microphone 183. Explanation on components of FIG. 3B that are the same or substantially similar to those illustrated in FIG. 3A will be omitted.

The processor 130 controls overall operations of the electronic device 100 using various instructions and/or programs stored in the storage 150.

Specifically, the processor 130 includes a random access memory (RAM) 131, a read only memory (ROM) 132, a main central processing unit (CPU) 133, a graphic processor 134, a 1st to nth interfaces 135-1 to 135-n, and a bus 136.

The RAM 131, the ROM 132, the main CPU 133, the graphic processor 134, and the 1st to nth interfaces 135-1 to 135-n may be connected to one another through the bus 136.

The 1st to nth interfaces 135-1 to 135-n are connected to various components among the above-described components. One of the 1st to nth interfaces 135-1 to 135-n may be a network interface that is connected to an external device through the network.

The main CPU 133 accesses the storage 150, and performs booting using an operating system (O/S) stored in the storage 150. The main CPU 133 performs various operations using various instructions and/or programs stored in the storage 150.

In the ROM 132, a command for booting the system is stored. When power is supplied in response to a turn on command, the main CPU 133 copies the O/S stored in the storage 150 to the RAM 131 according to the command for booting the system stored in the ROM 132, and boots the system by executing the O/S. In response to the booting being completed, the main CPU 133 copies various application programs stored in the storage 150 to the RAM 131, and performs various operations by executing the application programs copied to the RAM 131.

The graphic processor 134 generates a screen that includes various objects such as an icon, an image, a text, and the like using an arithmetic operator (not shown) and a renderer (not shown). The arithmetic operator arithmetically operates attribute values such as a coordinate value, a shape, a size, a color and the like of each object to be displayed according to a layout of the screen. The renderer generates screens having various layouts, based on the attribute values of objects arithmetically operated by the arithmetic operator. The screen generated by the renderer is displayed on a display area of the display 140.

The above-described operations of the processor 130 may be performed by the programs stored in the storage 150.

The storage 150 stores various data such as an O/S software module for driving the electronic device 100, information on the sensing result, and various information on a graphic user interface (GUI) and the like.

The processor 130 may receive, transmit, and display the sensing result based on the information stored in the storage 150.

The user interface 155 receives various user interactions. Herein, the user interface 155 may be provided in one of various formats depending on embodiments of the electronic device 100. In a case where the electronic device 100 is provided in a digital television (TV), the user interface 155 may include, for example, a remote receiver that receives a remote control signal from the remote control device 200, a camera that senses a user motion, and a microphone that receives a user voice. In a case where the electronic device 100 is provided in a touch-based portable terminal, the user interface 155 may include a touch screen that forms a mutual layer structure with a touch pad. In this case, the display 140 may be used for the user interface 155.

The audio processor 160 is a component that processes audio data. Various processes such as decoding, amplifying, and noise filtering of the audio data may be performed by the audio processor 160.

The video processor 170 is a component that processes video data. Various image processes such as decoding, scaling, noise filtering, frame rate conversion, and resolution conversion of the video data may be performed by the video processor 170.

The speaker 180 is a component that outputs various audio data processed in the audio processor 160, various alarm sounds, and/or voice messages and the like.

The button 181 may be provided in various types such as a mechanical button, a touch pad, and a wheel, and the button 181 may be formed on an area of a front surface, a side surface, and/or a rear surface of an exterior of a main body of the electronic device 100'.

The camera 182 is a component for capturing a still image and/or a video according to the user's control. The camera 182 may include a plurality of cameras including a front camera and a rear camera, for example. The microphone 183 is a component for receiving user's voice or other sounds and converting the user's voice or sounds into audio data.

In response to a power on state of the electronic device 100, the power source (not shown) may supply power to the first communicator 110 and the second communicator 120, and in response to a standby state of the electronic device 100, the power source may supply power to the first communicator 110 but not to the second communicator 120.

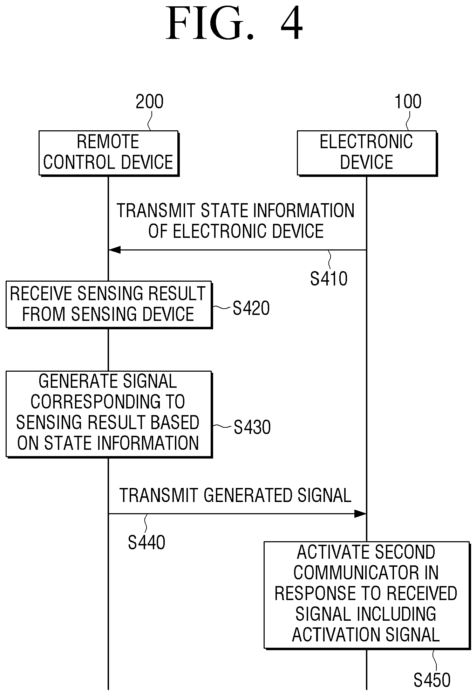

FIG. 4 is a sequence view for explaining a process of the electronic device 100 receiving a sensing result according to an exemplary embodiment.

According to FIG. 4, the processor 130 transmits state information of the electronic device 100 to the remote control device 200 (S410). Accordingly, the remote control device 200 may determine whether the electronic device 100 is in a power on state or a standby state. When the state information is not received from the electronic device 100 for a predetermined period of time, the remote control device 200 may determine that the electronic device 200 is in a power off state.

The remote control device 200 may receive a sensing result from the sensing device (S420), and generate a signal corresponding to the sensing result based on state information of the electronic device 100 (S430). For example, in response to determining that the electronic device 100 is in a power on state based on the state information of the electronic device 100, the remote control device 200 may generate a signal including only the sensing result and transmit the generated signal to the electronic device 100. In response to determining that the electronic device 100 is in a standby state based on the state information of the electronic device 100, the remote control device 200 may generate a signal, which includes the sensing result and a signal for activating the electronic device 100, and transmit the generated signal to the electronic device 100. In response to determining that the electronic device is in a power off state, instead of transmitting the sensing result, the remote control device 200 may flicker an LED provided in the remote control device 200 to notify the user of the power off state of the electronic device 100.

The processor 130 may receive the signal generated from the remote control device 200 (S440). The processor 130 may activate the second communicator 120 in response to the received signal including the activation signal (S450). However, the exemplary embodiments are not limited thereto, and the processor 130 may also activate the second communicator 120 in response to receiving a signal that includes the sensing result from the remote control device 200.

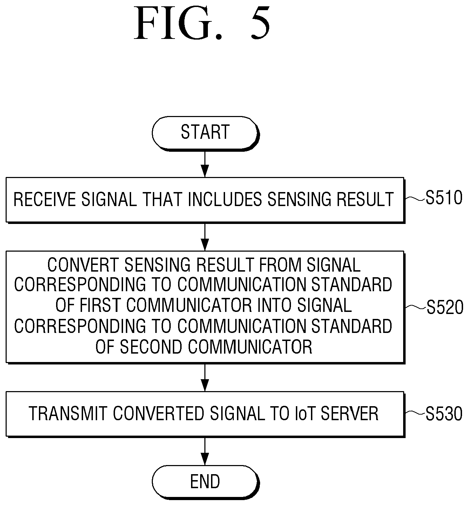

FIG. 5 is a flowchart for explaining a process of transmitting a sensing result from the electronic device 100 to the IoT server 300.

According to FIG. 5, the processor 130 receives the signal that includes the sensing result from the remote control device 200 through the first communicator 110 (S510). As described above, when the electronic device 100 is in a standby state, the first communicator 110 may be in an activated state and the second communicator 120 is in an inactivated state. In response to receiving a signal that includes the sensing result and/or in response to the received signal including the activation signal for activating the second communicator 120, the processor 130 may activate the second communicator 120.

The processor 130 may convert the sensing result into a signal that it is in accordance with the communication standard of the second communicator 120 (S520). As described above, the first communicator 110 and second communicator 120 may use different communication standards, and thus, the communication standard of the sensing result may need to be converted. The processor 130 may transmit the converted signal to the IoT server 300 (S530).

For example, assuming that the first communicator 110 communicates with the remote control device 200 using the Bluetooth standard and the second communicator 120 communicates with the IoT server 300 using the WiFi standard, the processor 130 may, in response to receiving a signal that includes the sensing result in accordance with the Bluetooth standard, convert the signal into a signal that is in accordance with the WiFi standard, and transmit the converted signal to the IoT server 300.

Although it is described in the above described exemplary embodiment that the first communicator 110 communicates with the remote control device 200 using the Bluetooth standard and the second communicator 120 communicates with the IoT server 300 using the WiFi standard, the exemplary embodiments are not limited thereto. For example, the first communicator 110 and the second communicator 120 may use communication standards from among, but not limited to, a Bluetooth low energy (BLE) communication standard, a near field communication standard, a wireless local area network (WLAN) communication standard, a ZigBee communication standard, an infrared Data Association (IrDA) communication standard, a WiFi Direct (WFD) communication standard, an ultra wideband (UWB) communication standard, and an Ant+ communication standard.

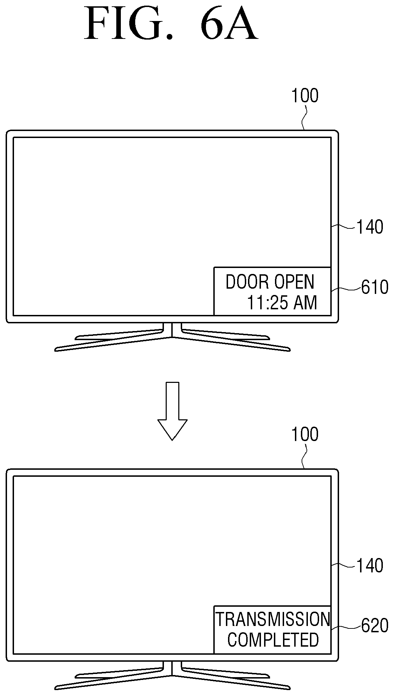

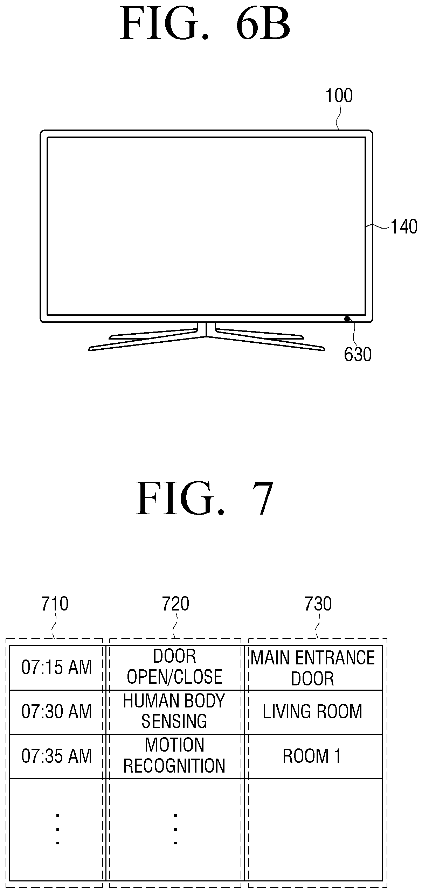

FIGS. 6A and 6B are views for explaining operations of the electronic device 100 according to exemplary embodiments.

FIG. 6A is a view for explaining an example of displaying the sensing result according to an exemplary embodiment.

According to FIG. 6A, the electronic device 100 may further include the display 140, and the processor 130 may control the display 140 to display the received sensing result 610. For example, in response to the received sensing result "door open" 610 and the time 11:25 A.M. at which the sensing result is sensed, the processor 130 may display the received information on a bottom right portion of the display 140. The processor 130 may display the information at substantially the same time the information is received.

The processor 130 may control the display 140 to display a UI 620 for notifying when the transmission of the received sensing result to the loT server 300 is completed. For example, the processor 130 may display a message "transmission completed" on an area of the display 140 where the received sensing result 610 was previously displayed. The message may disappear after being displayed for a certain period of time on the display 140.

In FIG. 6A, the processor 130 displays the message on the bottom right portion of the screen 140, but the exemplary embodiments are not limited thereto. For example, the processor 130 may display the message on a top right portion of the display 140. Also, it is possible for the user to control a setting of the electronic device 100 such that the message is not displayed.

FIG. 6B is a view for explaining the case where the electronic device 100 does not display any content on the display 140. However, the exemplary embodiments are not limited thereto, and the exemplary embodiments may be applied when the electronic device 100 displays a certain content. For example, when the electronic device 100 currently displays a certain broadcast content on the display 140, the sensing result may be displayed on the display 140 such that the display of the sensing result overlaps the display of the certain broadcast content. However, in this case, the sensing result may be displayed in an area having a smaller size on the display 140 in order to minimize interruption to the user's viewing of the broadcast content.

The electronic device 100 may display the sensing result in various methods. For example, the electronic device 100 may not display a content on an area where the sensing result is to be displayed so that readability of the sensing result by the user may be improved.

FIG. 6B is a view for explaining a method of indicating a sensing result according to another exemplary embodiment.

According to FIG. 6B, the processor 130 may indicate the sensing result using an LED 630 provided in the electronic device 100. For example, the processor 130 may control the LED 630 to flicker in response to receiving the sensing result from the remote control device 200. When transmitting the sensing result to the IoT server 300, the processor 130 may change a speed of flickering of the LED 630. However, the exemplary embodiments are not limited thereto, and in a case where the color of the LED 630 provided in the electronic device 100 is changeable, the processor 130 may change the color of the LED 630. In a case where the electronic device 100 has a plurality of LEDs 630, the processor 130 may control respective operations of the plurality of LEDs 630 to display operation states related to the sensing result to the user.

FIG. 7 is a view for explaining a method of storing the sensing result to be transmitted to the loT server 300 according to an exemplary embodiment.

According to FIG. 7, the electronic device 100 may further include the storage 150, and the processor 130 may, in response to receiving a signal that includes the sensing result sensed by at least one sensing device, store the received sensing result in the storage 150. For example, according to FIG. 7, the processor 130 may, for example, store a timing 710 of sensing, a sensed object 720, and a place 730 of sensing and the like, but the exemplary embodiments are not limited thereto. For example, the processor 130 may store only some of the timing of sensing, the sensed object, and the place of sensing.

The processor 130 may activate the second communicator 120 a predetermined period of time after storing the sensing result to transmit the sensing result to the IoT server 300. For example, after one hour from receiving a signal that includes the sensing result to be stored in the storage 150, the processor 130 may activate the second communicator 120, and the processor 130 may transmit the sensing result that is stored in the storage 150 to the IoT server 300. In this manner, it is possible to reduce power consumption in the second communicator 120.

The processor 130 may group the sensing result based on at least one of the timing of sensing the received sensing result, the sensed object, and the sensing method, and store the grouped sensing result in the storage 150. For example, in a case of grouping the sensing result based on the sensed object, the processor 130 may store a grouped sensing result regarding whether the door is open or closed in a sequential time order, and store a grouped sensing result regarding human body sensing in a sequential time order.

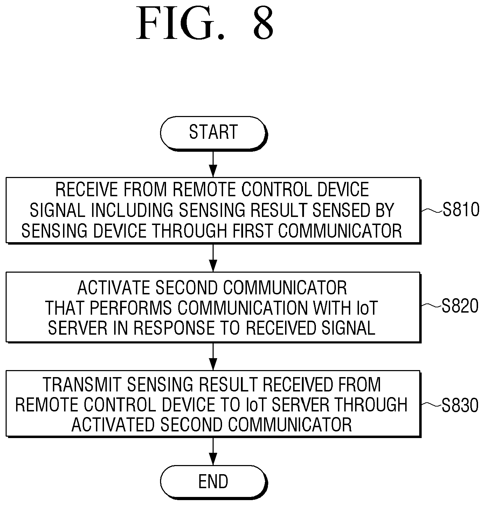

FIG. 8 is a flowchart for explaining a control method of the electronic device 100 according to an exemplary embodiment.

According to FIG. 8, a signal that includes a sensing result sensed by at least one sensing device is received from the remote control device 200, which remotely controls the electronic device 100, through the first communicator 110 (S810). In response to the received signal, the second communicator 120 that performs communication with the IoT server 300 is activated (S820). The sensing result received from the remote control device 200 is transmitted to the IoT server 300 through the activated second communicator 120 (S830).

In operation S810, state information of the electronic device 100 may be transmitted to the remote control device 200, and a signal corresponding to the sensing result may be generated based on the state information of the electronic device 100 and transmitted from the remote control device 200. For example, when the state information of the electronic device 100 indicates a standby state of the electronic device 100, the signal corresponding to the sensing result is generate such that the generated signal includes a signal (or activation signal) for activating the second communicator 120. The second communicator 120 may be activated in response to the received signal including the activation signal (S820).

In operation S820, the sensing result may need to be converted into a signal that is in accordance with the communication standard of the second communicator 120, and the converted signal is transmitted to the IoT server 300 (S830).

For example, the first communicator 110 may perform communication with the remote control device 200 using the Bluetooth standard, and the second communicator 120 may perform communication with the IoT server 300 using the WiFi standard. In this case, in operation S820, the sensing result may be converted from a signal that is in accordance with the Bluetooth standard into a signal that is in accordance with the WiFi standard in response to receiving the signal that includes the sensing result, and in operation S830, the converted signal may be transmitted to the IoT server 300.

The control method of the electronic device 100 may further include inactivating the second communicator 120 that is activated by the activation signal, in response to completion of the transmission of the sensing result received from the remote control device 200 to the IoT server 300.

The sensing result may include a result of at least one of sensing whether the door is open or closed, sensing a human body, and motion recognition. However, this is merely an example and the exemplary embodiments are not limited thereto.

The control method of the electronic device 100 may further include displaying a UI for displaying the received sensing result and for notifying when the transmission of the received sensing result to the IoT server 300 is completed.

The control method of the electronic device 100 may further include, in response to receiving a signal that includes a sensing result sensed by at least one sensing device, storing the received sensing result. In this case, in the operation S820, the second communicator 120 may be activated after a predetermined period of time after storing the received sensing result, and in operation S830, the sensing result that is stored for the predetermined period of time is transmitted to the IoT server 300.

The control method of the electronic device 100 may further include grouping the sensing result based on at least one of, for example, the timing of sensing the received sensing result, the sensed object, and the sensing method, and store the grouped sensing result.

In the exemplary embodiments described above, the electronic device 100 transmits the sensing result to the IoT server 300, but the exemplary embodiments are not limited thereto. For example, the electronic device 100, while transmitting the sensed result to the IoT server 300, may incorporate a control signal for controlling the electronic device 100 into the sensed result such that the sensed result may be transmitted to the user.

The second communicator 120 of the electronic device 100 may be activated by the user as well as by the remote control device 200. For example, the user may activate the second communicator 120 of the electronic device 100 by inputting an activation signal by using the smart phone 30. In this case, for example, instead of activating the entirety of the second communicator 120, a minimum configuration for receiving the activation signal from the user may be activated.

According to the exemplary embodiments, the electronic device 100 receives a sensing result of a sensing device to activate a certain communicator of the electronic device 100, and transmits the received sensing result to the IoT server 300 to provide an IoT environment to the user, while minimizing consumption of waiting power.

The exemplary embodiments may be programmed in computer instructions and/or codes and stored in various storage media. Accordingly, the methods according to the exemplary embodiments may be implemented in various types of electronic devices (e.g., general-use computers) that execute the computer instructions and/or codes stored in a computer readable storage medium.

Specifically, according to an exemplary embodiment, there may be provided a non-transitory computer readable medium that stores a program that, when executed by a computer, performs receiving a signal that includes a sensing result sensed by at least one sensing device from the remote control device, which remotely controls the electronic device, through the first communicator; activating the second communicator that performs communication with the Internet of things (IoT) server in response to receiving the signal; and transmitting the sensing result received from the remote control device to the IoT server through the activated second communicator.

The non-transitory computer readable medium refers to a computer readable medium configured to store data semi-permanently and not for a short period of time such as a register, cache, and memory and the like. Specifically, various applications and/or programs for performing the methods according to the exemplary embodiments may be stored and provided in a non-transitory computer readable medium such as a compact disk (CD), a digital versatile disk (DVD), a hard disk, a blue-ray disk, a universal serial bus (USB), a memory card, a ROM and the like.

Although a few preferred embodiments have been shown and described, it will be appreciated by those skilled in the art that various changes and modifications might be made without departing from the invention defined in the appended claims.

## Claims

1. A sensing assembly for providing a sensing result to a user through an loT, Internet of Things, server (300), the assembly comprising:
an electronic device (100);
a remote control device (200) configured to control the electronic device remotely, to receive a sensed result from at least one of a plurality of sensing devices and to transmit a signal including the sensed result to the electronic device;
wherein the electronic device comprises:
a display (140);
a first communicator (110) configured to perform communication with the remote control device, and the first communicator configured to be in an activated state in response to the electronic device being in a standby state;
a second communicator (120) configured to perform communication with said IoT server, and the second communicator configured to be in an inactivated state in response to the electronic device being in the standby state; and
a processor (130) configured to, in response to receiving the signal that includes the sensed result from the remote control device, activate the second communicator to transmit the sensed result to the IoT server and, in response to receiving the sensed result from the remote control device, display the received sensed result by the display; and
wherein in the standby state of the electronic device, power is supplied to the first communicator but not to the second communicator.

2. The sensing assembly according to claim 1,
wherein the processor (130) is configured to transmit state information of the electronic device (100) to the remote control device (200), receive the signal corresponding to the sensed result from the remote control device based on the state information of the electronic device, and in response to the received signal including an activation signal, activate the second communicator (120).

3. The sensing assembly according to claim 1 or claim 2,
wherein the processor (130), in response to receiving the signal that includes the sensed result, is configured to convert the sensed result into a signal that is in accordance with a communication standard of the second communicator (120), and to transmit the converted signal to said IoT server (300).

4. The sensing assembly according to claim 3,
wherein the first communicator (110) is configured to perform the communication with the remote control device (200) using the Bluetooth standard,
the second communicator (120) is configured to perform the communication with the IoT server using the WiFi standard, and
the processor (130), in response to receiving the signal that includes the sensed result, is configured to convert the signal that is in accordance with the Bluetooth standard into a signal that is in accordance with the WiFi standard, and to transmit the converted signal to the IoT server (300).

5. The sensing assembly according to any one of claims 1 to 4,
wherein the processor (130), in response to transmission of the sensed result received from the remote control device to the IoT server (300) being completed, is configured to inactivate the second communicator (120).

6. The sensing assembly according to any one of claims 1 to 5,
wherein the sensed result includes at least one of a result of sensing whether a door is open or closed, a result of human body sensing, and a result of motion recognition.

7. The sensing assembly according to any one of claims 1 to 6,
wherein the processor (130) is configured to control the display (140) to display a UI (620) for displaying the received sensed result and for notifying when transmission of the received sensed result to the IoT server (300) is completed.

8. The sensing assembly according to any one of claims 1 to 7,
wherein the electronic device (100) further comprises a storage (150),
wherein the processor (130), in response to receiving the signal that includes the sensed result sensed by the at least one sensing device from the remote control device (200), is configured to store the received sensed result in the storage, and to activate the second communicator (120) a predetermined period of time after the sensing result is stored to transmit the sensed result to the IoT server (300).

9. The sensing assembly according to claim 8,
wherein the processor (130) is configured to group the received sensed result based on at least one of a timing of sensing the received sensed result, a sensed object, and a sensing method, and store stores the grouped sensed result in the storage (150).

10. The sensing assembly according to any one of claims 1 to 9,
wherein the electronic device (100) further comprises a power source configured to supply power to the first communicator (110) and second communicator (120) in response to the electronic device being in a power on state, and to supply power to the first communicator but not to the second communicator in response to the electronic device being in the standby state.

11. A method for controlling an electronic device (100) to providing a sensing result to a user through an IoT, Internet of Things, server (300), wherein the electronic device is provided with a first communication module (110) configured to be in an activated state in response to the electronic device being in a standby state, a second communication module (120) configured to be in an inactivated state in response to the electronic device being in the standby state and a display (140), wherein in the standby state of the electronic device, power is supplied to the first communicator but not to the second communicator and the display,
the method comprising:
receiving a signal that includes a sensed result sensed by at least one of a plurality of sensing devices (20-1 to 20-4) at a remote control device (200) configured to control the electronic device remotely,
transmitting the signal including the sensed result to the electronic device, from the remote control device, through the first communication module;
in response to receiving the signal, activating the second communication module that performs communication with an IoT server; and
transmitting the sensed result received from the remote control device to the IoT server through the activated second communication module,
in response to receiving the sensed result from the remote control device, displaying the received sensed result by the display.

12. The method according to claim 11,
further comprising transmitting state information of the electronic device (100) to the remote control device (200);
wherein the receiving receives the signal corresponding to the sensed result from the remote control device based on the state information of the electronic device, and
the activating activates the second communication module (120) in response to the received signal including an activation signal.

13. The method according to claim 11 or claim 12,
further comprising, in response to receiving the signal that includes the sensed result, converting the sensed result into a signal that is in accordance with a communication standard of the second communication module (120),
wherein the transmitting transmits the converted signal to the IoT server (300).

14. The method according to claim 13,
wherein the first communication module (110) performs communication with the remote control device (200) using the Bluetooth standard,
the second communication module performs communication with the IoT server (300) using the WiFi standard,
the converting, in response to receiving the signal that includes the sensed result, converts the sensed result from the Bluetooth standard into a signal that is in accordance with the WiFi standard, and
the transmitting transmits the converted signal to the IoT server.

15. The method according to any one of claims 11 to 14,
further comprising, in response to transmission of the sensed result received from the remote control device (200) to the IoT server (300) being completed, inactivating the second communication module (120).

## Patentansprüche

1. Erfassungsbaugruppe zum Bereitstellen eines Erfassungsergebnisses über einen IoT- bzw. Internet-der-Dinge-Server (300) an einen Benutzer, wobei die Baugruppe Folgendes umfasst:
eine elektronische Einrichtung (100);
eine Fernsteuereinrichtung (200), die ausgelegt ist zum entfernten Steuern der elektronischen Einrichtung, ein erfasstes Ergebnis von mindestens einer mehrerer Erfassungseinrichtungen zu empfangen und ein Signal, das das erfasste Ergebnis beinhaltet, zu der elektronischen Einrichtung zu übertragen;
wobei die elektronische Einrichtung Folgendes umfasst:
eine Anzeige (140);
einen ersten Kommunikator (110), der ausgelegt ist zum Durchführen einer Kommunikation mit der Fernsteuereinrichtung, und wobei der erste Kommunikator dazu ausgelegt ist, sich als Reaktion darauf, dass sich die elektronische Einrichtung in einem Standby-Zustand befindet, in einem aktivierten Zustand zu befinden;
einen zweiten Kommunikator (120), der ausgelegt ist zum Durchführen einer Kommunikation mit dem IoT-Server, und wobei der zweite Kommunikator dazu ausgelegt ist, sich als Reaktion darauf, dass sich die elektronische Einrichtung in dem Standby-Zustand befindet, in einem deaktivierten Zustand zu befinden; und
einen Prozessor (130), der ausgelegt ist zum, als Reaktion auf das Empfangen des Signals, das das erfasste Ergebnis beinhaltet, von der Fernsteuereinrichtung, Aktivieren des zweiten Kommunikators, um das erfasste Ergebnis zu dem IoT-Server zu übertragen, und, als Reaktion auf das Empfangen des erfassten Ergebnisses von der Fernsteuereinrichtung, Anzeigen des empfangenen erfassten Ergebnisses durch die Anzeige; und
wobei im Standby-Zustand der elektronischen Einrichtung der erste Kommunikator, aber nicht der zweite Kommunikator mit Leistung versorgt wird.

2. Erfassungsbaugruppe nach Anspruch 1,
wobei der Prozessor (130) ausgelegt ist zum Übertragen von Zustandsinformationen der elektronischen Einrichtung (100) zu der Fernsteuereinrichtung (200), Empfangen des Signals entsprechend dem erfassten Ergebnis von der Fernsteuereinrichtung basierend auf den Zustandsinformationen der elektronischen Einrichtung, und, als Reaktion darauf, dass das empfangene Signal ein Aktivierungssignal beinhaltet, Aktivieren des zweiten Kommunikators (120).

3. Erfassungsbaugruppe nach Anspruch 1 oder Anspruch 2,
wobei der Prozessor (130), als Reaktion auf das Empfangen des Signals, das das erfasste Ergebnis beinhaltet, ausgelegt ist zum Umwandeln des erfassten Ergebnisses in ein Signal, das einem Kommunikationsstandard des zweiten Kommunikators (120) entspricht, und Übertragen des umgewandelten Signals zu dem IoT-Server (300).

4. Erfassungsbaugruppe nach Anspruch 3,
wobei der erste Kommunikator (110) ausgelegt ist zum Durchführen der Kommunikation mit der Fernsteuereinrichtung (200) unter Verwendung des Bluetooth-Standards,
der zweite Kommunikator (120) ausgelegt ist zum Durchführen der Kommunikation mit dem IoT-Server unter Verwendung des WiFi-Standards, und
der Prozessor (130), als Reaktion auf das Empfangen des Signals, das das erfasste Ergebnis beinhaltet, ausgelegt ist zum Umwandeln des Signals, das dem Bluetooth-Standard entspricht, in ein Signal, das dem WiFi-Standard entspricht, und Übertragen des umgewandelten Signals zu dem IoT-Server (300).

5. Erfassungsbaugruppe nach einem der Ansprüche 1 bis 4,
wobei der Prozessor (130), als Reaktion darauf, dass eine Übertragung des erfassten Ergebnisses, das von der Fernsteuereinrichtung empfangen wird, zu dem IoT-Server (300) beendet ist, ausgelegt ist zum Deaktivieren des zweiten Kommunikators (120).

6. Erfassungsbaugruppe nach einem der Ansprüche 1 bis 5,
wobei das erfasste Ergebnis ein Ergebnis des Erfassens, ob eine Tür offen oder geschlossen ist, und/oder ein Ergebnis des Erfassens eines menschlichen Körpers und/oder ein Ergebnis einer Bewegungserkennung beinhaltet.

7. Erfassungsbaugruppe nach einem der Ansprüche 1 bis 6,
wobei der Prozessor (130) ausgelegt ist zum Steuern der Anzeige (140), eine UI (620) zum Anzeigen des empfangenen erfassten Ergebnisses und zum Melden, wenn eine Übertragung des empfangenen erfassten Ergebnisses zu dem IoT-Server (300) beendet ist, anzuzeigen.

8. Erfassungsbaugruppe nach einem der Ansprüche 1 bis 7,
wobei die elektronische Einrichtung (100) ferner einen Speicher (150) umfasst,
wobei der Prozessor (130), als Reaktion auf das Empfangen des Signals, das das erfasste Ergebnis beinhaltet, das durch die mindestens eine Erfassungseinrichtung erfasst wird, von der Fernsteuereinrichtung (200), ausgelegt ist zum Speichern des empfangenen erfassten Ergebnisses in dem Speicher und Aktivieren des zweiten Kommunikators (120) für einen vorbestimmten Zeitraum, nachdem das Erfassungsergebnis gespeichert ist, um das erfasste Ergebnis zu dem IoT-Server (300) zu übertragen.

9. Erfassungsbaugruppe nach Anspruch 8,
wobei der Prozessor (130) ausgelegt ist zum Gruppieren des empfangenen erfassten Ergebnisses basierend auf einem Erfassungs-Timing des empfangenen erfassten Ergebnisses und/oder einem erfassten Objekt und/oder einem Erfassungsverfahren und zum Speichern das gruppierte erfasste Ergebnis im Speicher (150) speichert.

10. Erfassungsbaugruppe nach einem der Ansprüche 1 bis 9,
wobei die elektronische Einrichtung (100) ferner eine Leistungsquelle umfasst, die ausgelegt ist zum Versorgen des ersten Kommunikators (110) und des zweiten Kommunikators (120) mit Leistung als Reaktion darauf, dass sich die elektronische Einrichtung in einem Ein-Zustand befindet, und Versorgen des ersten Kommunikators, aber nicht des zweiten Kommunikators mit Leistung als Reaktion darauf, dass sich die elektronische Einrichtung in dem Standby-Zustand befindet.

11. Verfahren zum Steuern einer elektronischen Einrichtung (100), um ein Erfassungsergebnis über einen IoT- bzw. Internet-der-Dinge-Server (300) an einen Benutzer bereitzustellen, wobei die elektronische Einrichtung mit einem ersten Kommunikationsmodul (110), das dazu ausgelegt ist, sich als Reaktion darauf, dass sich die elektronische Einrichtung in einem Standby-Zustand befindet, in einem aktivierten Zustand zu befinden, einem zweiten Kommunikationsmodul (120), das dazu ausgelegt ist, sich als Reaktion darauf, dass sich die elektronische Einrichtung in dem Standby-Zustand befindet, in einem deaktivierten Zustand zu befinden, und einer Anzeige (140) ausgestattet ist, wobei in dem Standby-Zustand der elektronischen Einrichtung der erste Kommunikator, aber nicht der zweite Kommunikator und die Anzeige mit Leistung versorgt wird,
wobei das Verfahren Folgendes umfasst:
Empfangen eines Signals, das ein erfasstes Ergebnis beinhaltet, das durch mindestens eine mehrerer Erfassungseinrichtungen (20-1 bis 20-4) erfasst wird, an einer Fernsteuereinrichtung (200), die ausgelegt ist zum entfernten Steuern der elektronischen Einrichtung,
Übertragen des Signals, das das erfasste Ergebnis beinhaltet, von der Fernsteuereinrichtung über das erste Kommunikationsmodul zu der elektronischen Einrichtung;
als Reaktion auf das Empfangen des Signals, Aktivieren des zweiten Kommunikationsmoduls, das eine Kommunikation mit einem IoT-Server durchführt; und
Übertragen des erfassten Ergebnisses, das von der Fernsteuereinrichtung empfangen wird, über das aktivierte zweite Kommunikationsmodul zu dem IoT-Server,
als Reaktion auf das Empfangen des erfassten Ergebnisses von der Fernsteuereinrichtung, Anzeigen des empfangenen erfassten Ergebnisses durch die Anzeige.

12. Verfahren nach Anspruch 11,
ferner umfassend Übertragen von Zustandsinformationen der elektronischen Einrichtung (100) zu der Fernsteuereinrichtung (200) ;
wobei das Empfangen das Signal entsprechend dem erfassten Ergebnis von der Fernsteuereinrichtung basierend auf den Zustandsinformationen der elektronischen Einrichtung empfängt, und
das Aktivieren das zweite Kommunikationsmodul (120) als Reaktion darauf aktiviert, dass das empfangene Signal ein Aktivierungssignal beinhaltet.

13. Verfahren nach Anspruch 11 oder Anspruch 12,
ferner umfassend, als Reaktion auf das Empfangen des Signals, das das erfasste Ergebnis beinhaltet, Umwandeln des erfassten Ergebnisses in ein Signal, das einem Kommunikationsstandard des zweiten Kommunikationsmoduls (120) entspricht,
wobei das Übertragen das umgewandelte Signal zu dem IoT-Server (300) überträgt.

14. Verfahren nach Anspruch 13,
wobei das erste Kommunikationsmodul (110) eine Kommunikation mit der Fernsteuereinrichtung (200) unter Verwendung des Bluetooth-Standards durchführt,
das zweite Kommunikationsmodul eine Kommunikation mit dem IoT-Server (300) unter Verwendung des WiFi-Standards durchführt,
das Umwandeln, als Reaktion auf das Empfangen des Signals, das das erfasste Ergebnis beinhaltet, das erfasste Ergebnis von dem Bluetooth-Standard in ein Signal, das dem WiFi-Standard entspricht, umwandelt, und
das Übertragen das umgewandelte Signal zu dem IoT-Server überträgt.

15. Verfahren nach einem der Ansprüche 11 bis 14,
ferner umfassend, als Reaktion darauf, dass eine Übertragung des erfassten Ergebnisses, das von der Fernsteuereinrichtung (200) empfangen wird, zu dem IoT-Server (300) beendet ist, Deaktivieren des zweiten Kommunikationsmoduls (120).

## Revendications

1. Ensemble de détection pour fournir un résultat de détection à un utilisateur par l'intermédiaire d'un serveur Internet of Things, IoT, (300), cet ensemble comprenant :
un dispositif électronique (100) ;
un dispositif de télécommande (200) configuré de façon à commander ce dispositif électronique à distance, afin de recevoir un résultat détecté provenant d'au moins un d'une pluralité de dispositifs de détection et de transmettre un signal comprenant le résultat détecté au dispositif électronique ;
le dispositif électronique comprenant :
un écran (140) ;
un premier appareil de communication (110) configuré de façon à exécuter une communication avec le dispositif de télécommande, et ce premier appareil de communication étant configuré de façon à être dans un état activé en réponse au dispositif électronique étant dans un état d'attente ;
un deuxième appareil de communication (120) configuré de façon à exécuter une communication avec ledit serveur IoT, et ce deuxième appareil de communication étant configuré de façon à être dans un état inactivé en réponse au dispositif électronique étant dans l'état de veille ; et
un processeur (130) configuré de façon à, en réponse à la réception du signal qui comprend le résultat détecté provenant du dispositif de télécommande, activer le deuxième appareil de communication afin de transmettre le résultat détecté au serveur IoT et, en réponse à la réception du résultat détecté provenant du dispositif de télécommande, à afficher le résultat détecté reçu au moyen de l'écran ; et
dans lequel, lorsque le dispositif électronique est dans l'état de veille, une alimentation est fournie au premier appareil de communication mais pas au deuxième appareil de communication.

2. Ensemble de détection selon la revendication 1,
dans lequel le processeur (130) est configuré de façon à transmettre une information d'état du dispositif électronique (100) au dispositif de télécommande (200), à recevoir le signal correspondant au résultat détecté provenant du dispositif de télécommande basé sur l'information d'état du dispositif de télécommande, et, en réponse au signal reçu comprenant un signal d'activation, à activer le deuxième appareil de communication (120).

3. Ensemble de détection selon la revendication 1 ou la revendication 2,
dans lequel le processeur (130), en réponse à la réception du signal qui comprend le résultat détecté, est configuré de façon à convertir le résultat détecté en un signal qui est conforme à une norme de communication du deuxième appareil de communication (120), et à transmettre ce signal converti audit serveur IoT (300).

4. Ensemble de détection selon la revendication 3,
dans lequel le premier appareil de communication (110) est configuré de façon à exécuter la communication avec le dispositif de télécommande (200) en utilisant la norme Bluetooth,
le deuxième appareil de communication (120) est configuré de façon à exécuter la communication avec le serveur IoT en utilisant la norme WiFi, et
le processeur (130), en réponse à la réception du signal qui comprend le résultat détecté, est configuré de façon à convertir le signal qui est conforme à la norme Bluetooth en un signal qui est conforme à la norme WiFi, et à transmettre ce signal converti audit serveur IoT (300).

5. Ensemble de détection selon l'une quelconque des revendications 1 à 4,
dans lequel le processeur (130), en réponse à l'achèvement de la transmission au serveur IoT (300) du résultat détecté reçu du dispositif de télécommande, est configuré de façon à inactiver le deuxième appareil de communication (120).

6. Ensemble de détection selon l'une quelconque des revendications 1 à 5,
dans lequel le résultat détecté comprend au moins soit un résultat de la détection de si une porte est ouverte ou fermée, soit un résultat de la détection d'un corps humain, soit un résultat d'une reconnaissance de mouvement.

7. Ensemble de détection selon l'une quelconque des revendications 1 à 6,
dans lequel le processeur (130) est configuré de façon à commander l'écran (140) pour qu'il affiche une interface utilisateur (620) pour afficher le résultat détecté reçu et pour notifier quand la transmission du résultat détecté reçu au serveur IoT (300) a été achevée.

8. Ensemble de détection selon l'une quelconque des revendications 1 à 7,
dans lequel le dispositif électronique (100) comprend en outre une mémoire (150),
dans lequel le processeur (130), en réponse à la réception du signal qui comprend le résultat détecté qui a été détecté par l'au moins un dispositif de détection provenant du dispositif de télécommande (200), est configuré de façon à stocker ce résultat détecté reçu dans la mémoire, et à activer le deuxième appareil de communication (120) une période de temps prédéterminée après que le résultat de détection a été stocké pour transmettre le résultat détecté au serveur IoT (300).

9. Ensemble de détection selon la revendication 8,
dans lequel le processeur (130) est configuré de façon à grouper le résultat détecté reçu en se basant sur au moins soit un moment de détection du résultat détecté reçu, soit un objet détecté, soit un procédé de détection, et à stocker stocke ce résultat détecté groupé dans la mémoire (150).

10. Ensemble de détection selon l'une quelconque des revendications 1 à 9,
dans lequel le dispositif électronique (100) comprend en outre une source d'alimentation configurée de façon à alimenter de l'énergie au premier appareil de communication (110) et au deuxième appareil de communication (120) en réponse au dispositif électronique étant dans un état sous tension, et à alimenter de l'énergie au premier appareil de communication mais pas au deuxième appareil de communication en réponse au dispositif électronique étant dans l'état d'attente.

11. Procédé pour commander un dispositif électronique (100) pour qu'il fournisse un résultat de détection à un utilisateur par l'intermédiaire d'un serveur Internet of Things, IoT, (300), ce dispositif électronique étant fourni avec un premier module de communication (110) configuré de façon à être dans un état activé en réponse au dispositif électronique étant dans un état de veille, avec un deuxième module de communication (120) configuré de façon à être dans un état inactivé en réponse au dispositif électronique étant dans l'état de veille et avec un écran (140), une alimentation étant fournie au premier appareil de communication mais pas au deuxième appareil de communication et à l'écran lorsque le dispositif électronique est dans l'état de veille,
ce procédé comprenant :
la réception d'un signal qui comprend un résultat détecté qui est détecté par au moins un d'une pluralité de dispositifs de détection (20-1 à 20-4) au niveau d'un dispositif de télécommande (200) configuré de façon à commander le dispositif électronique à distance,
la transmission de ce signal comprenant le résultat détecté au dispositif électronique, depuis le dispositif de télécommande, par l'intermédiaire du premier module de communication ;
en réponse à la réception de ce signal, l'activation du deuxième module de communication qui exécute une communication avec un serveur IoT ; et
la transmission du résultat détecté reçu du dispositif de télécommande au serveur IoT par l'intermédiaire du deuxième module de communication activé,
en réponse à la réception du résultat détecté provenant du dispositif de télécommande, l'affichage du résultat détecté reçu par l'écran.

12. Procédé selon la revendication 11,
comprenant en outre la transmission d'une information d'état du dispositif électronique (100) au dispositif de télécommande (200) ;
la réception consistant à recevoir le signal correspondant au résultat détecté provenant du dispositif de télécommande en se basant sur l'information d'état du dispositif électronique, et
l'activation consistant à activer le deuxième module de communication (120) en réponse au signal reçu comprenant un signal d'activation.

13. Procédé selon la revendication 11 ou la revendication 12,
comprenant en outre, en réponse à la réception du signal qui comprend le résultat détecté, la conversion du résultat détecté en un signal qui est conforme à une norme de communication du deuxième module de communication (120),
la transmission consistant à transmettre le signal converti au serveur IoT (300).

14. Procédé selon la revendication 13,
dans lequel le premier module de communication (110) exécute une communication avec le dispositif de télécommande (200) en utilisant la norme Bluetooth,
le deuxième module de communication exécute une communication avec le serveur IoT (300) en utilisant la norme WiFi,
la conversion, en réponse à la réception du signal qui comprend le résultat détecté, convertit le résultat détecté de la norme Bluetooth en un signal qui est conforme à la norme WiFi, et
la transmission transmet le signal converti au serveur IoT.

15. Procédé selon l'une quelconque des revendications 11 à 14,
comprenant en outre, en réponse à l'achèvement de la transmission du résultat détecté reçu du dispositif de télécommande (200) au serveur IoT (300), l'inactivation du deuxième module de communication (120) .
